# EUROPEAN PATENT APPLICATION

(11) **EP 4 711 144 A1**
(43) Date of publication of application: **18.03.2026**
(21) Application number: 25200848.7
(22) Date of filing: 08.09.2025
(51) Int. Cl.: B41J 11/00, G06F 3/12, G06K 15/02

(54) **INK-JET RECORDING APPARATUS**

(30) Priority: 17.09.2024 JP 2024160397
(71) Applicant: Kyocera Document Solutions Inc., Osaka-shi, Osaka 540-8585 (JP)
(72) Inventor: NISHIHARA, Masaaki, Osaka-shi, 540-8585 (JP)
(74) Representative: BRP Renaud & Partner mbB Rechtsanwälte Patentanwälte Steuerberater

(57) **Abstract**

A controller (38) of an ink-jet recording apparatus (10) creates, for each of line heads (15Y, 15B, 15C, 15M), a print queue of print jobs each for forming a multicolor image on a sheet (P) and executes the print jobs according to the print queue. When a width of the sheet (P) is smaller than a sheet width for use in the print job not yet being executed, the controller (38) sets, on a basis of each of the line heads (15Y, 15B, 15C, 15M), width information on the sheet (P) in association with the print job not yet being executed at the line head and executes, based on the width information set to the print job not yet being executed at each of the line heads, mask processing for narrowing a color image of the print job not yet being executed in a widthwise direction of the sheet (P).

## Description

### BACKGROUND

The present invention relates to ink-jet recording apparatuses that eject respective different colors of ink droplets from a plurality of line heads to a sheet to form a multicolor image on the sheet, and particularly relates to a technique for reducing the width of ink ejection according to the width of the sheet.

There is an ink-jet recording apparatus in which a plurality of line heads are arranged spaced apart along a direction of conveyance of a sheet conveyed by a conveying belt and respective different colors of ink droplets are sequentially ejected from the line heads to the sheet being conveyed to form a multicolor image on the sheet.

An image forming apparatus is also known in which an edge of a sheet is detected by an image sensor, a misalignment of the sheet in the main scanning direction (the widthwise direction of the sheet) is recognized based on the detected edge, and image data is subjected to mask processing based on the recognized misalignment before the ejection of ink droplets from the line heads.

### SUMMARY

A technique improved over the aforementioned techniques is proposed as one aspect of the present invention.

An ink-jet recording apparatus according to an aspect of the present invention includes a conveying belt, a plurality of line heads, a sheet width sensor, and a controller. The conveying belt conveys a sheet. The plurality of line heads are arranged spaced apart along a direction of conveyance of the sheet and sequentially eject respective different colors of ink droplets predetermined for formation of multicolor images to the sheet to form a multicolor image on the sheet. The sheet width sensor is disposed upstream of the line heads in the direction of conveyance of the sheet and detects a width of the sheet. The controller creates, for each of the line heads, a print queue indicating a queue of at least one print job for forming the multicolor image on the sheet, executes the print job in accordance with the print queue, and determines whether or not the width of the sheet detected by the sheet width sensor is smaller than a width of a sheet for use in the print job. When determining that the width of the sheet detected by the sheet width sensor is smaller than the width of the sheet for use in the print job, the controller sets, on a basis of each of the line heads, width information indicating the detected width of the sheet in association with a print queue element not yet being executed in the print queue at the line head and executes, based on the width information set in association with the print queue element not yet being executed at each of the line heads, mask processing for reducing a size of a color image corresponding to the print queue element not yet being executed to the width indicated by the width information in a widthwise direction of the sheet.

### BRIEF DESCRIPTION OF THE DRAWINGS

FIG. 1 is a cross-sectional view showing an ink-jet recording apparatus according to an embodiment of the present invention.
FIG. 2 is a block diagram showing an internal configuration of the ink-jet recording apparatus according to the embodiment.
FIG. 3 is a schematic chart showing a process for sequentially executing a first print job, a second print job, a third print job, and a fourth print job in accordance with a print queue to successively convey first to fourth sheets with a conveying belt, allow line heads to sequentially eject different colors of ink droplets to the sheets, and thus form respective multicolor images of the first to fourth print jobs on the sheets.
FIG. 4 is a flowchart showing a control procedure for setting, on a per line head basis, width information on a sheet in association with a print job not yet being executed in a print queue at the line head.
FIG. 5A is a flowchart showing a portion of a control procedure for executing, on a per line head basis, mask processing for reducing the size of a color image of the print job not yet being executed in a widthwise direction of the sheet.
FIG. 5B is a flowchart showing the rest of the control procedure continued from the portion thereof shown in FIG. 5A.

### DETAILED DESCRIPTION

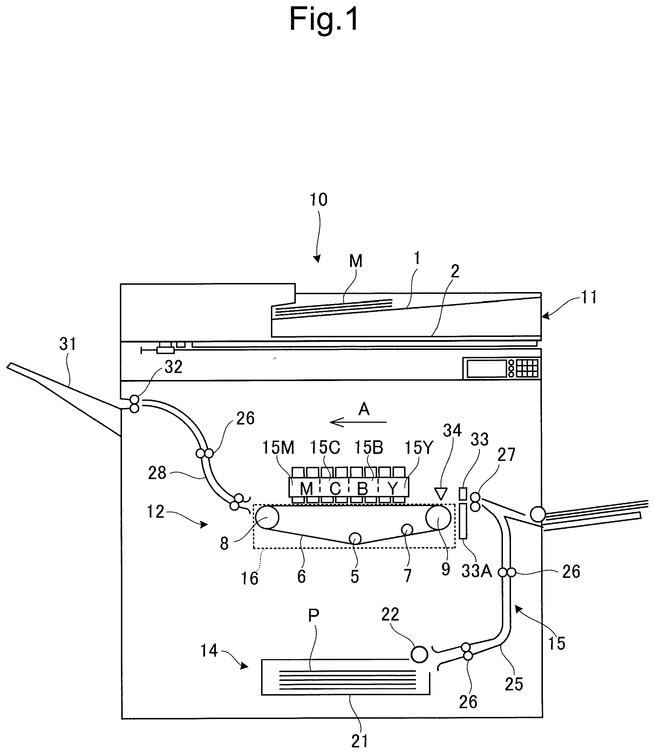

Hereinafter, a description will be given of an ink-jet recording apparatus according to an embodiment of the present invention. FIG. 1 is a cross-sectional view showing an ink-jet recording apparatus according to an embodiment of the present invention. As shown in FIG. 1, an ink-jet recording apparatus 10 includes an image reading device 11, an image forming device 12, a sheet feed device 14, a conveyance device 15, a conveyance unit 16, and so on.

The sheet feed device 14 includes a sheet feed cassette 21. The sheet feed cassette 21 is provided with a sheet feed roller 22. The sheet feed roller 22 pulls out sheets P contained in the sheet feed cassette 21 sheet by sheet by and feeds them to a conveyance path 25 of the conveyance device 15.

The conveyance device 15 includes: the conveyance path 25 in which a sheet P fed from the sheet feed device 14 is conveyed; conveyance rollers 26 provided at appropriate locations in conveyance paths 25 and 28; a registration roller 27 that feeds the sheet P forward to the conveyance unit 16 while correcting skew feed of the sheet P; a conveyance path 28 in which the sheet P conveyed via the conveyance unit 16 is conveyed; an ejection roller 32 that ejects the sheet P conveyed via the conveyance path 28 to a sheet output tray 31; and so on.

The conveyance unit 16 includes a drive roller 8, a driven roller 9, a tension roller 5, and a conveying belt 6. The conveying belt 6 is an endless belt and is mounted around the drive roller 8, the driven roller 9, and the tension roller 5. The drive roller 8 is a roller capable of being driven into counterclockwise rotation by a motor (for example, a stepping motor). When the drive roller 8 is driven into rotation, the conveying belt 6 travels around the above rollers counterclockwise and the driven roller 9 and the tension roller 5 rotate counterclockwise by following the travel of the conveying belt 6 engaged on them.

The sheet P is led through the registration roller 27 to the conveying belt 6 of the conveyance unit 16 and conveyed in the direction of conveyance A by the conveying belt 6.

The tension roller 5 is a roller that appropriately holds the tension of the conveying belt 6. An adsorption roller 7 is in contact with the conveying belt 6. The adsorption roller 7 electrically charges the conveying belt 6 to electrostatically adsorb the sheet P on the conveying belt 6.

The image reading device 11 includes as a pickup device for optically reading an image of an original document sheet M, for example, a contact image sensor (CIS). When a plurality of original document sheets M are placed on an original document tray 1, the image reading device 11 sequentially pulls out and conveys the plurality of original document sheets M sheet by sheet from the original document tray 1, reads an image of each original document sheet M with the pickup device while conveying the original document sheet M, and sequentially ejects the read original document sheets M to an ejection tray 2 to lay them one on top of another on the ejection tray 2. For each of the images of the original document sheets M, an output of the pickup device is converted to image data representing the image of the original document sheet M.

The image forming device 12 inputs the image data representing the image of each of the original document sheets M and forms the image of the original document sheet M represented by the image data on a sheet P using an ink-jet system. The image forming device 12 includes respective line heads 15Y, 15B, 15C, and 15M that eject four different colors (yellow, black, cyan, and magenta) of ink droplets. The line heads 15Y, 15B, 15C, and 15M eject respective different colors of ink droplets onto the sheet P being conveyed by the conveying belt 6 of the conveyance unit 16 to allow the ink droplets to be applied to the sheet P, thus forming a multicolor image on the sheet P.

After the image forming device 12 forms the image of the original document sheet on the sheet P, the sheet P is conveyed along the conveyance path 28 and then ejected through the ejection roller 32 to the sheet output tray 31.

Furthermore, in the conveyance path leading from the registration roller 27 to the line heads 15Y, 15B, 15C, and 15M, a sheet width sensor 33 capable of detecting the width of a sheet P and a sheet leading edge sensor 34 are disposed in upstream to downstream order in the direction of conveyance A of the sheet P. The sheet width sensor 33 is, for example, a CIS extending in the widthwise direction of the sheet P and detects the leading edge and both the lateral edges of the sheet P being illuminated by a light source 33A provided below the sheet width sensor 33. The sheet leading edge sensor 34 is, for example, an optical sensor including: a light-emitting element capable of irradiating the sheet P with light; and a light-receiving element capable of receiving light reflected on the sheet P, and detects the leading edge of the sheet P. Both the lateral ends of the sheet width sensor 33 in the widthwise direction of a sheet P orthogonal to the direction of conveyance A of the sheet P are located lateral to the maximum width of a sheet P printable by the ink-jet recording apparatus 10. The widthwise direction of the sheet width sensor 33 is the main scanning direction.

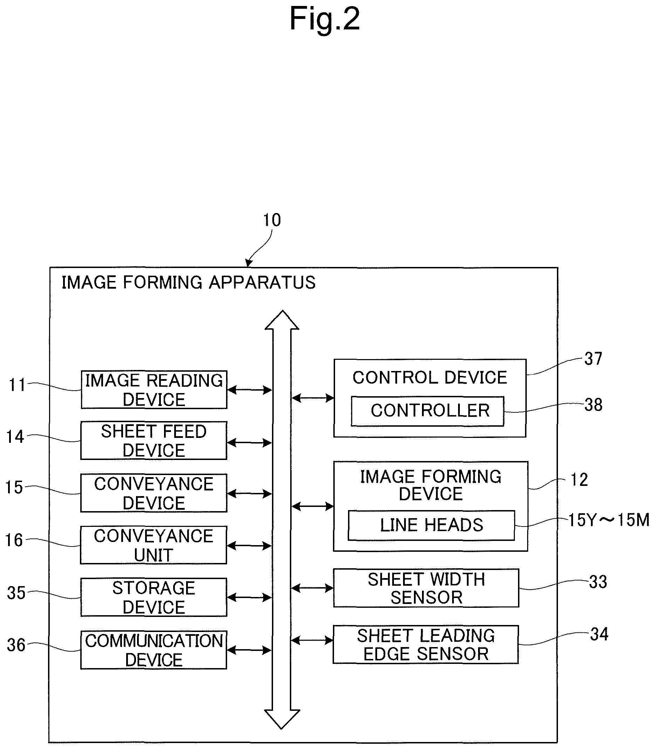

FIG. 2 is a block diagram showing an internal configuration of the ink-jet recording apparatus 10. As shown in FIG. 2, the ink-jet recording apparatus 10 includes the image reading device 11, the image forming device 12, the sheet feed device 14, the conveyance device 15, the conveyance unit 16, the sheet width sensor 33, the sheet leading edge sensor 34, a storage device 35, a communication device 36, and a control device 37. These components can transmit and receive data or signals to and from each other via a bus.

The storage device 35 is a large-capacity storage device, such as an SSD (solid state drive) or an HDD (hard disk drive), and holds various types of application programs and various types of data.

The communication device 36 is a communication interface including a communication module, such as a LAN chip. The communication device 36 is connected via a network (such as an intranet) N to an external terminal device (not shown) and performs data communication with the external terminal device.

The control device 37 is made up of a processor, a RAM (random access memory), a ROM (read only memory), and so on. The processor is, for example, a CPU (central processing unit), an ASIC (application specific integrated circuit) or an MPU (micro processing unit). When a control program stored in the above ROM or the storage device 35 is executed by the above processor, the control device 37 functions as a controller 38.

The controller 38 preforms overall control of the ink-jet recording apparatus 10. The controller 38 is connected to the image reading device 11, the image forming device 12, the sheet feed device 14, the conveyance device 15, the conveyance unit 16, the sheet width sensor 33, the sheet leading edge sensor 34, the storage device 35, the communication device 36, and so on and performs operation control on each of these components and signal or data transfer to and from each of the components.

The controller 38 serves as a processor that executes various types of processing necessary for image formation by the ink-jet recording apparatus 10.

Furthermore, the controller 38 determines a timing of detection of the leading edge of a sheet P based on a detection output of the sheet width sensor 33. Specifically, when both the lateral ends of a sheet P reach the point of detection of the sheet width sensor 33 as a result of conveyance of the sheet P, the controller 38 detects the locations of both the lateral ends of the sheet P in a known manner based on a detection output of the sheet width sensor 33 (for example, by detecting both the most lateral locations of an image of the sheet P that the sheet width sensor 33 has successfully read in the main scanning direction).

In addition, the controller 38 determines a timing of detection of the leading edge of the sheet P based on a detection output of the light-receiving element of the sheet leading edge sensor 34.

The conveying belt 6 corresponds to the conveying belt defined in CLAIMS, the line heads 15Y, 15B, 15C, and 15M correspond to the respective line heads defined in CLAIMS, the sheet width sensor 33 corresponds to the sheet width sensor defined in CLAIMS, and the controller 38 corresponds to the controller defined in CLAIMS.

When, in the ink-jet recording apparatus 10 having the above structure, for example, a print job sent from an external terminal device is received by the communication device 36, the controller 38 executes the print job. The print job contains print conditions, such as a sheet size, and respective pieces of image data (print target data) of different colors representing a multicolor image. The controller 38 executes the print job by converting respective pieces of image data of different colors in the print job to respective pieces of raster data, controlling the drive of the motor for use in rotating the drive roller 8 for the conveying belt 6 to allow the conveying belt 6 to convey a sheet P, and concurrently controlling the line heads 15Y, 15B, 15C, and 15M based on the respective pieces of raster data of different colors relating to the print job to allow the line heads 15Y, 15B, 15C, and 15M to eject different colors of ink droplets to the sheet P on the conveying belt 6 and thus form a multicolor image of the print job on the sheet P.

Furthermore, the controller 38 of the ink-jet recording apparatus 10 sets up ink ejection of each of the line heads 15Y, 15B, 15C, and 15M for enabling the line heads 15Y, 15B, 15C, and 15M to perform image formation based on image data contained in the print job, and creates, for the purpose of enabling successive execution of a plurality of print jobs, a print queue indicating a queue of the print jobs to allow each line head to perform ink ejection on a job-by-job basis. The controller 38 executes the print job by allowing each line head to perform ink ejection in accordance with the print queue.

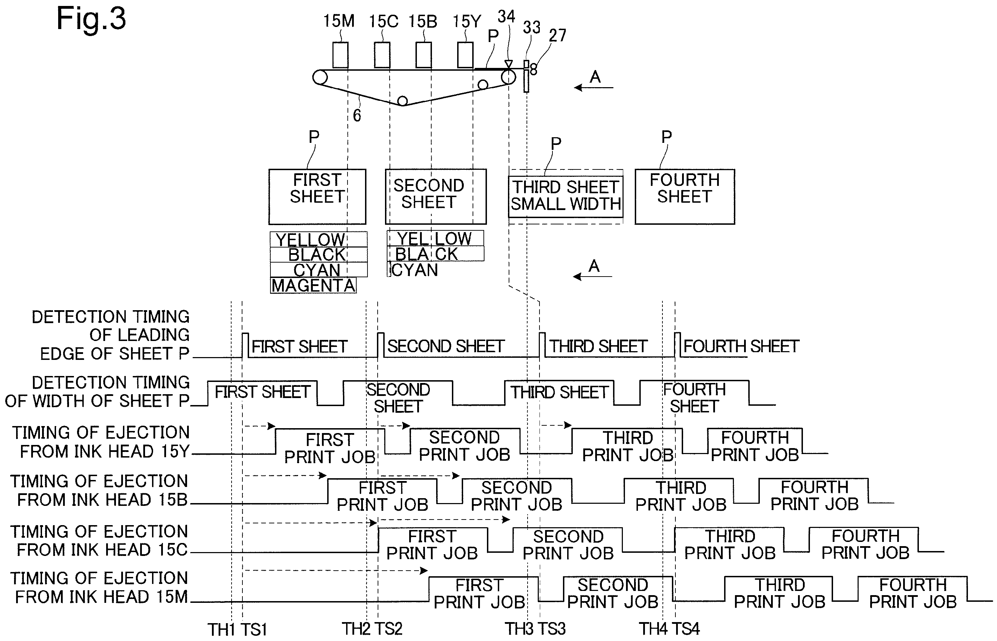

FIG. 3 is a schematic chart showing a process for sequentially executing a first print job J1, a second print job J2, a third print job J3, and a fourth print job J4 in accordance with a print queue to successively convey first to fourth sheets P with the conveying belt 6, allow the line heads 15Y, 15B, 15C, and 15M to sequentially eject different colors of ink droplets to the sheets P, and thus form respective multicolor images of the first to fourth print jobs J1 to J4 on the sheets P.

FIG. 3 shows an example in which, upstream of the line heads 15Y, 15B, 15C, and 15M in the direction of conveyance A of sheets P, the sheet width sensor 33 sequentially detects the respective widths of the first to fourth sheets P. The respective detection time points of the widths of the first, second, third, and fourth sheets P are represented by th1, th2, th3, and th4, respectively.

Furthermore, the sheet leading edge sensor 34 sequentially detects the respective leading edges of the first to fourth sheets P. The respective detection time points of the leading edges of the first, second, third, and fourth sheets P are represented by ts1, ts2, ts3, and ts4, respectively. Since the sheet leading edge sensor 34 is disposed downstream of the sheet width sensor 33 in the direction of conveyance A of sheets P, the detection time points ts1, ts2, ts3, and ts4 are later than the detection time points th1, th2, th3, and th4, respectively.

Moreover, since the sheet width sensor 33 and the sheet leading edge sensor 34 are located upstream of the line heads 15Y, 15B, 15C, and 15M of the image forming device 12 in the direction of conveyance A of sheets P, the sheets P at the times when their leading edges in the direction of conveyance A reach the detection point of the sheet width sensor 33 and at the times when they reach the detection point of the sheet leading edge sensor 34 are blank.

In this state, for example, in executing the first print job J1 to form a multicolor image on a sheet P, the controller 38 allows each of the line heads 15Y, 15B, 15C, and 15M to start ejecting ink droplets for the sake of the print job associated with the sheet P, at respective timings when the leading edge of the sheet P reaches each of the line heads 15Y, 15B, 15C, and 15M.

Under the control of the controller 38, the sheet P is conveyed by the registration roller 27 to pass the detection point of the sheet leading edge sensor 34 where the leading edge of the sheet P is to be detected, and then conveyed by the conveying belt 6. In doing so, the respective distances from the detection point of the sheet leading edge sensor 34 to each of the line heads 15Y, 15B, 15C, and 15M are known and the length of conveyance of the sheet P is correlated with the angle of rotation of the motor that rotates the drive roller 8 for the conveying belt 6. Therefore, the controller 38 calculates, based on the above distances and the angles of rotation, the respective angles of rotation of the motor required to convey the sheet P the respective distances from the detection point where the leading edge of the sheet P has been detected.

Based on detection outputs of the light-receiving element of the sheet leading edge sensor 34, the controller 38 sequentially detects the leading edges of the first to fourth sheets P conveyed sheet by sheet by the registration roller 27. The controller 38 detects the respective angles of rotation of the motor for the conveying belt 6 from the respective detection time points ts1, ts2, ts3, and ts4 where the leading edges of the first to fourth sheets P have been detected, and determines the respective timings when the angle of rotation of the motor has reached the respective angles of rotation corresponding to the above respective distances. When, in this manner, the controller 38 determines the respective timings when the leading edges of the first to fourth sheets P has reached each of the line heads 15Y, 15B, 15C, and 15M, the controller 38 allows each of the line heads 15Y, 15B, 15C, and 15M to start ejecting ink droplets for image formation in the first print job J1 with the respective determined timings. Thus, four different colors of ink droplets are ejected and applied to the first to fourth sheets P and, thus, respective multicolor images are formed on the sheets P.

Furthermore, when the controller 38 detects, based on detection outputs of the sheet width sensor 33, both ends of each of the first to fourth sheets P in the widthwise direction of the sheets P (both the lateral ends of each sheet), it sequentially determines the respective widths of the first to fourth sheets P at the respective detection time points th1, th2, th3, and th4 when both the lateral ends of each of the first to fourth sheets P have been detected.

At every determination of the widths of the first to fourth sheets P, the controller 38 compares the determined width of the sheet P with the width of a sheet size (the size in the widthwise direction) indicated by a print job to be applied to the sheet P. When the determined width of the sheet P is smaller than the width of the sheet size indicated by the print job, the controller 38 executes mask processing for reducing the size of the image of the print job in the widthwise direction of the sheet P. When the determined width of the sheet P is equal to or larger than the width of the sheet size indicated by the print job, the controller 38 does not execute the mask processing. This mask processing is, for example, processing for extracting, for each of respective pieces of raster data of different colors constituting a multicolor image as print data relating to a print job, a color image indicated by the piece of raster data, replacing pixels in both lateral regions of the color image in the widthwise direction with white pixels (pixels having a predetermined pixel value instructing to keep from ejecting ink droplets), and thus reducing the size of an image formed by the ink ejection to the determined width of the sheet P in the widthwise direction of the sheet P. For example, in an image having the width of a sheet size indicated by the print job, pixel regions located lateral in the widthwise direction to the determined width of a blank sheet P are set as both the lateral regions to be replaced with white pixels by the controller 38.

The controller 38 controls each of the line heads 15Y, 15B, 15C, and 15M based on the respective pieces of raster data of different colors subjected to the mask processing to narrow the ranges of ejection of ink droplets from the line heads 15Y, 15B, 15C, and 15M in the widthwise direction of the sheet P in the above manner and, in this state, allows the line heads 15Y, 15B, 15C, and 15M to eject ink droplets within the narrowed ranges of ejection to the sheet P on the conveying belt 6 and thus form a multicolor image on the sheet P. As a result, a multicolor image is formed without protruding from both the lateral ends of the sheet P. In addition, it can be prevented that ink droplets ejected from the line heads 15Y, 15B, 15C, and 15M protrude from both the lateral ends of the sheet P to contaminate the conveying belt 6 and so on.

Under the control of the controller 38 in the above manner, when the locations of both the lateral ends of a blank sheet P are detected by the sheet width sensor 33, the controller 38 determines the width of the sheet P based on the detected locations of both the lateral ends of the sheet P. When the determined width of the sheet P is smaller than the width of a sheet size indicated by a print job, the controller 38 subjects respective pieces of raster data of different colors relating to the print job to the mask processing and, thus, a multicolor image can be formed on the sheet P without protruding from both the lateral ends of the sheet P.

However, if, in successively conveying respective sheets P for use in a plurality of print jobs to be successively executed and allowing the line heads 15Y, 15B, 15C, and 15M to sequentially eject ink droplets to each of the sheets P, mask processing is concurrently done for the raster data of all the print jobs, as for a sheet P having a width larger than the width of a sheet size indicated by the associated print job, a resultant image does not protrude in the widthwise direction of the sheet P, but its width may be reduced, resulting in a failure in image formation.

For example, in the example shown in FIG. 3, at the determination time point (herein assumed to be at the detection time point th3) when the controller 38 has determined that the determined width of the sheet P for use in the third print job J3 is smaller than the width of the sheet size indicated by the print job, the sheet P for use in the first print job J1 has already passed the first to third line heads 15Y, 15B, and 15C and is in the middle of passing the fourth line head 15M. Therefore, on the first sheet P, yellow, black, and cyan images of the first print job J1 have already been formed and a magenta image of the first print job J1 is in the middle of being formed.

Furthermore, at the above determination time point, the second sheet P for use in the second print job J2 has passed the first line head 15Y, is in the middle of passing the second and third line heads 15B, 15C, and has not yet reached the fourth line head 15M. Therefore, on the second sheet P, a yellow image of the second print job J2 has already been formed, black and cyan images of the second print job J2 are in the middle of being formed, and a magenta image of the second print job J2 is not yet formed.

Moreover, the third sheet P for use in the third print job J3 has not yet reached the line heads 15Y, 15B, 15C, and 15M. Therefore, yellow, black, cyan, and magenta images of the third print job J3 are not yet formed on the third sheet P and the third sheet P is blank.

Likewise, the fourth sheet P for use in the fourth print job J4 has not yet reached the line heads 15Y, 15B, 15C, and 15M, yellow, black, cyan, and magenta images of the fourth print job J4 are not yet formed on the fourth sheet P, and the fourth sheet P is blank.

In the case where, as shown in FIG. 3, the width of the third sheet P is smaller than the width of a sheet size indicated by the third print job J3, if a piece of raster data representing a magenta image of the first print job J1 in the middle of being formed is subjected to mask processing, the magenta image of the first print job J1 does not protrude out of the sheet P in the widthwise direction of the sheet P, but the width of the magenta image is reduced midway. Furthermore, if pieces of raster data representing black and cyan images of the second print job J2 in the middle of being formed are subjected to mask processing, the black and cyan images of the second print job J2 do not protrude out of the sheet P in the widthwise direction of the sheet P, but the widths of the black and cyan images are reduced midway. Moreover, if a piece of raster data representing a magenta image of the second print job J2 before being formed is subjected to mask processing, a resultant magenta image of the second print job J2 does not protrude out of the sheet P in the widthwise direction of the sheet P, but the width of the magenta image is reduced.

In the case where, additionally, the width of the fourth sheet P for use in the fourth print job J4 is not smaller than the width of a sheet size indicated by the fourth print job J4, if respective pieces of raster data representing respective images of different colors of the fourth print job J4 before being formed are subjected to mask processing, all the color images of the fourth print job J4 are reduced in width.

Therefore, it is necessary to do, on a per sheet P basis, control for subjecting or not subjecting respective pieces of raster data of different colors relating to each print job to mask processing.

In this embodiment, the controller 38 determines, based on the locations of both the lateral ends of a blank sheet P detected by the sheet width sensor 33, the width of the sheet P. When the determined width of the sheet P is smaller than the width of a sheet size indicated by a print job to be applied to the sheet P and not yet being executed, the controller 38 sets, on the basis of each of the line heads 15Y, 15B, 15C, and 15M, width information indicating the determined width of the sheet P in association with a print queue element corresponding to the print job not yet being executed in the print queue at the line head. Then, the controller 38 executes, based on the width information on the sheet P set in association with the print queue element corresponding to the print job not yet being executed at each of the line heads 15Y, 15B, 15C, and 15M, mask processing for reducing the size of a color image corresponding to the print queue element associated with the print job not yet being executed to the width indicated by the width information in the widthwise direction of the sheet P.

For example, when the controller 38 determines that, as shown in FIG. 3, the width of the third blank sheet P is smaller than the width of a sheet size indicated by the third print job J3, the controller 38 sets, at this determination time point th3 and on the basis of each of the line heads 15Y, 15B, 15C, and 15M, width information on the third sheet P in association with a print queue element associated with the third print job J3 to be applied to the third sheet P and not yet being executed in the print queue at the line head. Then, the controller 38 subjects, based on the width information on the third sheet P set in association with the print queue element associated with the third print job J3 not yet being executed at each of the line heads 15Y, 15B, 15C, and 15M, respective pieces of raster data of different colors relating to the third print job J3 not yet being executed to mask processing, thus reducing the size of color images of the third print job J3 in the widthwise direction of the sheet P.

In this case, the controller 38 sets, on the basis of each of the line heads 15Y, 15B, 15C, and 15M, width information on the third sheet P only in association with the third print job J3, without any association with the first print job J1, the second print job J2, and the fourth print job J4 to be applied to the first, second, and fourth sheets P, respectively, in the print queue at each line head. Therefore, the respective pieces of raster data of different colors relating to each of the first print job J1, the second print job J2, and the fourth print job J4 to be applied to the first, second, and fourth sheets P, respectively, are not subjected to the mask processing.

Hence, when respective color images represented by the respective pieces of raster data of different colors relating to a print job do not protrude out of the sheet P in the widthwise direction of the sheet P, the color images are kept form being reduced in width. In other words, in successively conveying a plurality of sheets P and forming respective multicolor images based on the respective print jobs on the sheets P, as for a sheet P short of the width needed to form a multicolor image, an image can be formed thereon by reducing the width of ink ejection according to the sheet width. As for a sheet P having enough width to form a multicolor image, an image can be formed thereon as expected.

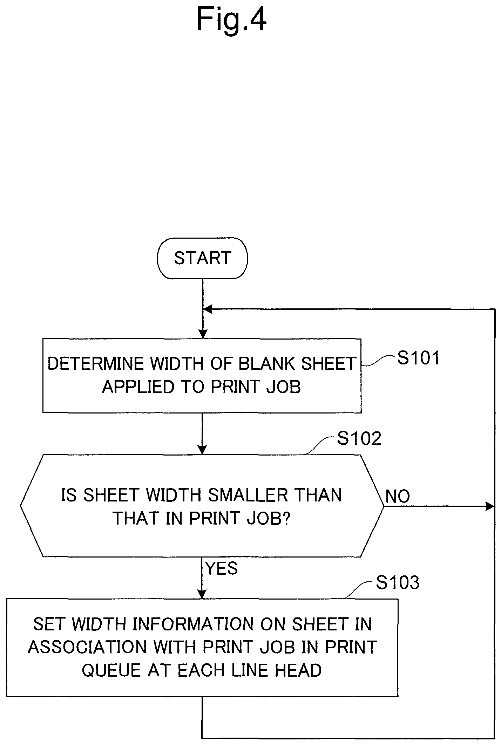

Next, a description will be given of a control procedure for setting, on the basis of each of the line heads 15Y, 15B, 15C, and 15M, width information on a sheet P in association with a print job not yet being executed in a print queue at the line head when the width of the sheet P determined in the above manner is smaller than the width of a sheet size indicated by the print job, with reference to the flowchart shown in FIG. 4 and other drawings.

When the locations of both the lateral ends of a blank sheet P are detected by the sheet width sensor 33, the controller 38 determines the width of the sheet P based on the detected locations of both the lateral ends of the sheet P (S101), and determines whether or not the determined width of the sheet P is smaller than the width of a sheet size indicated by a print job to be applied to the sheet P and not yet being executed (S102).

For example, in the example shown in FIG. 3, when the locations of both the lateral ends of the first blank sheet P are detected by the sheet width sensor 33, the controller 38 determines the width of the first sheet P (S101), and determines that the width of the first sheet P is not smaller than the width of a sheet size indicated by the first print job J1 to be applied to the first sheet P and not yet being executed ("No" in S102). Likewise, when the locations of both the lateral ends of each of the second and fourth blank sheets P are detected by the sheet width sensor 33, the controller 38 determines the widths of the second and fourth sheets P (S101), and determines that the widths of the second and fourth sheets P are not smaller than the respective widths of sheet sizes indicated by the second print job J2 and the fourth print jobs J4 to be applied to the second and fourth sheets P, respectively, and both not yet being executed ("No" in S102).

Furthermore, when the locations of both the lateral ends of the third blank sheet P are detected by the sheet width sensor 33, the controller 38 determines the width of the third sheet P (S101), and determines that the width of the third sheet P is smaller than the width of a sheet size indicated by the third print job J3 to be applied to the third sheet P and not yet being executed ("Yes" in S102).

When the controller 38 determines that the width of the third blank sheet P is smaller than the width of a sheet size indicated by the third print job J3 to be applied to the third sheet P and not yet being executed ("Yes" in S102), the controller 38 sets, at this determination time point th3, width information indicating the width of the third sheet P with respect to respective print queue elements associated with the third print job J3 not yet being executed in the respective print queues at the line heads 15Y, 15B, 15C, and 15M (S103).

As for each of the first, second, and fourth blank sheets P, the controller 38 has determined that the width of the sheet P is not smaller than the width of a sheet size indicated by the print job to be applied to the sheet P and not yet being executed ("No" in S102) and, therefore, does not execute the processing in S103 at their respective determination time points th1, th2, and th4.

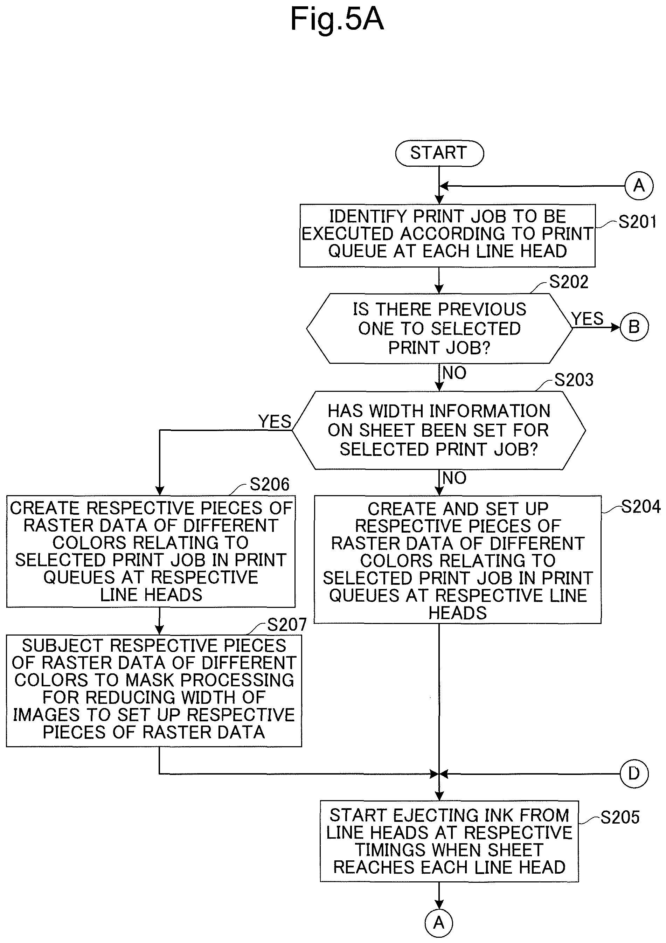

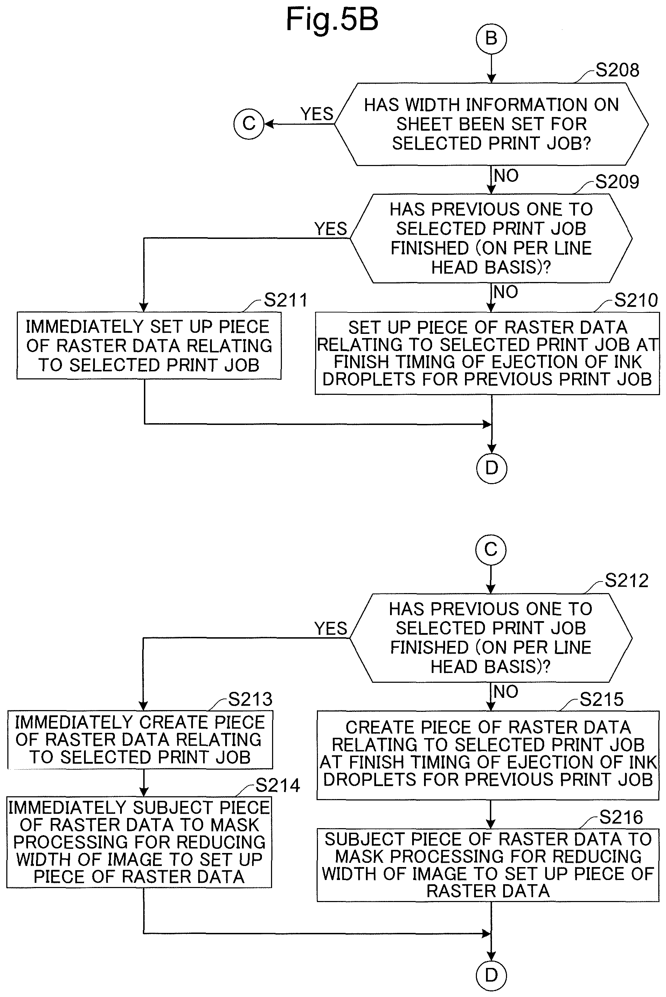

Next, a description will be given of a control procedure for executing, on the basis of each of the line heads 15Y, 15B, 15C, and 15M, mask processing for reducing the size of a color image of a print job not yet being executed in the widthwise direction of a sheet P, with reference to the flowcharts shown in FIGS. 5A and 5B and other drawings. While the control procedure of the flowcharts shown in FIGS. 5A and 5B is executed, the control procedure of the flowchart shown in FIG. 4 is repeatedly executed.

The controller 38 identifies, based on the print queue at each of the line heads 15Y, 15B, 15C, and 15M, a print job in which ink ejection is to be performed, for example, the first print job J1 in the example shown in FIG. 3 (S20 1) and determines whether or not there is a print queue element which is previous to the print queue element corresponding to the identified print job and corresponds to another print job (S202).

In the example shown in FIG. 3, in the print queue at each of the line heads 15Y, 15B, 15C, and 15M, the first print job J1 is an initial print job and a previous print job does not exist as a subject of determination in S202. Therefore, the controller 38 determines, based on the print queue at each of the line heads 15Y, 15B, 15C, and 15M, a previous one to the first print job J1 does not exist ("No" in S202). Then, at the time point th1 when the controller 38 has determined, based on a detection output of the sheet width sensor 33, the width of a first sheet P on which a multicolor image of the first print job J1 is to be formed, the controller 38 determines whether or not width information on the sheet P has been set in association with the selected first print job J1 in the respective print queues at the line heads 15Y, 15B, 15C, and 15M (S203).

Since, as described previously, the widths of the first, second, and fourth sheets P are not smaller than the respective widths of the sheet sizes indicated by their respective print jobs, width information indicating the width of the sheet P is not set with respect to respective print queue elements corresponding to the first, second, and fourth print jobs J1, J2, and J4 not yet being executed in the print queue at each of the line heads 15Y, 15B, 15C, and 15M.

The controller 38 determines that width information on the sheet P has not been set with respect to respective print queue elements corresponding to the first print job J1 in the print queues at the line heads 15Y, 15B, 15C, and 15M ("No" in S203), converts respective pieces of image data of different colors representing respective color images of the print queue elements corresponding to the first print job J1 to respective pieces of raster data of the different colors, allows respective buffer memories of the line heads 15Y, 15B, 15C, and 15M to store the respective pieces of raster data of different colors to set up the pieces of raster data (S204), and then allows the line heads 15Y, 15B, 15C, and 15M to start ejecting ink droplets based on the respective pieces of raster data of different colors with their respective timings when the leading edge of the first sheet P reaches each of the line heads 15Y, 15B, 15C, and 15M (S205).

Therefore, in the case of execution of the not-yet-executed first print job J1 in accordance with the print queue, i.e., in the case of performing ink ejection for the print queue elements corresponding to the first print job J1, respective pieces of image data of different colors representing different color images of the first print job J1 are converted to respective pieces of raster data of the different colors, and the respective pieces of raster data of different colors are stored in the respective buffer memories of the line heads 15Y, 15B, 15C, and 15M and set up.

In another case, it is possible that the width of the first sheet P is smaller than the width of a sheet size indicated by the first print job J1 to be applied to the first sheet P and not yet being executed ("Yes" in S102) and, thus, width information indicating the width of the first sheet P is set in association with the first print job J1 not yet being executed in each of the print queues at the line heads 15Y, 15B, 15C, and 15M (S103). In this case, the controller 38 determines, based on the print queue, that a previous one to the first print job J1 does not exist ("No" in S202). Then, at the time point th1 when the controller 38 has determined, based on a detection output of the sheet width sensor 33, the width of the first sheet P on which a multicolor image of the selected first print job J1 is to be formed, the controller 38 determines that width information on the first sheet P has been set with respect to respective print queue elements corresponding to the first print job J1 in the print queues at the line heads 15Y, 15B, 15C, and 15M ("Yes" in S203), converts respective pieces of image data of different colors representing different color images of the first print job J1 to respective pieces of raster data of the different colors (S206), and subjects, based on the width information on the first sheet P, the respective pieces of raster data of different colors on the first print job J1 to the above-described mask processing, thus setting up the respective pieces of raster data of different colors (S207). Then, the controller 38 allows the line heads 15Y, 15B, 15C, and 15M to start ejecting ink droplets based on the respective pieces of raster data of different colors with their respective timings when the leading edge of the first sheet P reaches each of the line heads 15Y, 15B, 15C, and 15M (S205).

Subsequently, the controller 38 identifies, based on the print queue at each of the line heads 15Y, 15B, 15C, and 15M, a print job in which ink ejection is to be performed next, i.e., the second print job J2 in the example shown in FIG. 3 (S201) and determines whether or not there is a print queue element which is previous to the print queue element corresponding to the identified print job and corresponds to another print job (S202). In this example, the controller 38 determines that the first print job J1 exists as a previous one to the second print job J2 ("Yes" in S202). In this case, at the time point th2 when the controller 38 has determined the width of a second sheet P for use in the selected second print job J2 based on a detection output of the sheet width sensor 33, the controller 38 determines whether or not width information on the sheet P has been set with respect to respective print queue elements corresponding to the second print job J2 in the respective print queues at the line heads 15Y, 15B, 15C, and 15M (S208).

When determining that width information on the sheet P has not been set with respect to the respective print queue elements corresponding to the second print job J2 in the respective print queues at the line heads 15Y, 15B, 15C, and 15M ("No" in S208), the controller 38 determines, on the basis of each of the line heads 15Y, 15B, 15C, and 15M, whether or not ink ejection for the first print job J1, which is a previous one to the second print job J2, has finished (S209).

In the state shown in FIG. 3, at the time point th2 when the width of the second sheet P for use in the second print job J2 has been determined based on a detection output of the sheet width sensor 33, the previous first print job J1 has not yet finished in the line heads 15Y, 15B, 15C, and 15M.

The controller 38 determines that the previous first print job J1 has not yet finished in each of the line heads 15Y, 15B, 15C, and 15M ("No" in S209). Since the ejection of ink droplets of the four colors for the first print job J1 has not finished, the controller 38 converts, at the respective timings when the line heads 15Y, 15B, 15C, and 15M have finished ejecting ink droplets and on the basis of each of the line heads, respective pieces of image data of the four colors on the second print job J2 in the respective print queues at these line heads to respective pieces of raster data, allows the respective buffer memories of the line heads 15Y, 15B, 15C, and 15M to sequentially store the respective pieces of raster data, and thus sets up the raster data (S210).

On the other hand, when the controller 38 determines that the previous first print job J1 has finished in at least one of the line heads 15Y, 15B, 15C, and 15M ("Yes" in S209), this means that the ejection of ink droplets for the first print job J1 from the at least one line head has already finished. Therefore, the controller 38 immediately converts, at the time point th2, a piece of image data of a single color on the second print job J2 in the print queue at this line head to a piece of raster data of the color and promptly sets up the piece of raster data (S211).

Then, the controller 38 allows the line heads 15Y, 15B, 15C, and 15M to start ejecting ink droplets based on the respective pieces of raster data of different colors with respective timings when the leading edge of the second sheet P reaches each of the line heads 15Y, 15B, 15C, and 15M (S205).

Subsequently, the controller 38 identifies, based on the print queue at each of the line heads 15Y, 15B, 15C, and 15M, a print job in which ink ejection is to be performed next, i.e., the third print job J3 in the example shown in FIG. 3 (S201) and determines whether or not there is a print queue element which is previous to the print queue element corresponding to the identified print job and corresponds to another print job (S202). In this example, the controller 38 determines that the second print job J2 exists as a previous one to the third print job J3 ("Yes" in S202). At the time point th3 when the controller 38 has determined the width of a third sheet P for use in the third print job J3 based on a detection output of the sheet width sensor 33, the controller 38 determines whether or not width information on the sheet P has been set with respect to respective print queue elements corresponding to the third print job J3 in the respective print queues at the line heads 15Y, 15B, 15C, and 15M (S208).

In this example, the controller 38 determines that width information on the sheet P has been set in association with the selected third print job J3 in the respective print queues at the line heads 15Y, 15B, 15C, and 15M ("Yes" in S208). The controller 38 determines, on the basis of each of the line heads 15Y, 15B, 15C, and 15M, whether or not the second print job J2, which is a previous one to the third print job J3, has finished (S212).

In the state shown in FIG. 3, at the time point th3 when the width of the third sheet P for use in the third print job J3 has been determined based on a detection output of the sheet width sensor 33, the previous second print job J2 has finished in the line head 15Y, but has not yet finished in the other line heads 15B, 15C, and 15M.

The controller 38 determines that the previous second print job J1 has finished in the line head 15Y ("Yes" in S212). Since, therefore, the ejection of ink droplets for the second print job J2 from the line head 15Y has already finished, the controller 38 immediately converts, at the above time point th3, a piece of image data of yellow on the third print job J3 in the print queue at the line head 15Y to a piece of raster data of yellow (S213), immediately subjects the piece of raster data to the mask processing based on the width information on the third sheet P, allows the buffer memory of the line head 15Y to store the piece of raster data, and thus sets up the piece of raster data (S214).

Furthermore, the controller 38 determines that the previous second print job J2 has not yet finished in each of the other line heads 15B, 15C, and 15M ("No" in S212). Since the ejection of ink droplets of black, cyan, and magenta for the second print job J2 from the other line heads 15B, 15C, and 15M has not finished, the controller 38 converts, at the respective timings when the other line heads 15B, 15C, and 15M have finished ejecting ink droplets for the second print job J2 and on the basis of each of these line heads, respective pieces of image data of the three colors on the third print job J3 in the respective print queues at these line heads 15B, 15C, and 15M to respective pieces of raster data (S215), sequentially subjects the respective pieces of raster data of black, cyan, and magenta to the mask processing based on the width information on the third sheet P, allows the respective buffer memories of the other line heads 15B, 15C, and 15M to sequentially store the respective pieces of raster data of black, cyan, and magenta, and thus sets up these pieces of raster data (S216).

Then, the controller 38 allows the line heads 15Y, 15B, 15C, and 15M to start ejecting ink droplets based on the respective pieces of raster data of different colors with respective timings when the leading edge of the third sheet P reaches each of the line heads 15Y, 15B, 15C, and 15M (S205).

Furthermore, the controller 38 identifies, based on the print queue at each of the line heads 15Y, 15B, 15C, and 15M, a print job in which ink ejection is to be performed next, i.e., the fourth print job J4 in the example shown in FIG. 3 (S201) and determines whether or not there is a print queue element which is previous to the print queue element corresponding to the identified print job and corresponds to another print job (S202). In this example, the controller 38 determines that the third print job J3 exists as a previous one to the fourth print job J4 ("Yes" in S202). At the time point th4 when the controller 38 has determined the width of a fourth sheet P for use in the fourth print job J4 based on a detection output of the sheet width sensor 33, the controller 38 determines whether or not width information on the sheet P has been set with respect to respective print queue elements corresponding to the fourth print job J4 in the respective print queues at the line heads 15Y, 15B, 15C, and 15M (S208).

In this example, the controller 38 determines that width information on the sheet P has not been set with respect to the respective print queue elements corresponding to the fourth print job J4 in the respective print queues at the line heads 15Y, 15B, 15C, and 15M ("No" in S208), and determines, on the basis of each of the line heads 15Y, 15B, 15C, and 15M, whether or not the third print job J3, which is a previous one to the fourth print job J4, has finished (S209).

The controller 38 determines that the previous third print job J3 has not yet finished in all the line heads 15Y, 15B, 15C, and 15M ("No" in S209). Since the ejection of ink droplets of the four colors for the third print job J3 has not finished, the controller 38 converts, at the respective timings when the line heads 15Y, 15B, 15C, and 15M have finished ejecting ink droplets and on the basis of each of the line heads, respective pieces of image data of the four colors on the fourth print job J4 in the respective print queues at these line heads to respective pieces of raster data, allows the respective buffer memories of the line heads 15Y, 15B, 15C, and 15M to sequentially store the respective pieces of raster data, and thus sets up the pieces of raster data (S210).

Then, the controller 38 allows the line heads 15Y, 15B, 15C, and 15M to start ejecting ink droplets based on the respective pieces of raster data of different colors with respective timings when the leading edge of the fourth sheet P reaches each of the line heads 15Y, 15B, 15C, and 15M (S205).

As thus far described, in this embodiment, when the width of a blank sheet P is smaller than the width of a sheet size indicated by a print job to be applied to the sheet P and not yet being executed, width information on the sheet P is set, on the basis of each of the line heads 15Y, 15B, 15C, and 15M, in association with the print job not yet being executed in a print queue at the line head, and color images of the print job not yet being executed in each of the print queues at the line heads 15Y, 15B, 15C, and 15M are subjected, based on the width information set with respect to the print job in the print queue at each of the line heads, to the mask processing for reducing the size of the color images in the widthwise direction of the sheet P. Therefore, it can be avoided that even though respective images having different colors represented by respective pieces of raster data of different colors on another print job do not protrude out of a sheet P in the widthwise direction of the sheet P, images having different colors represented by respective pieces of raster data on the relevant print job are rather reduced in width. In other words, according to this embodiment, in successively conveying a plurality of sheets P and forming respective multicolor images on the sheets P, as for a sheet P short of the width to form a multicolor image, an image can be formed thereon by reducing the width of ink ejection according to the sheet width. As for a sheet P having enough width to form a multicolor image, an image can be formed thereon as expected.

In the above embodiment, a CIS is exemplified as the sheet width sensor 33. This sheet width sensor 33 preferably has a length larger than the width of a sheet P as described above for the reason that it detects both the lateral ends of the sheet P. However, a sheet width sensor having a length smaller than the width of a sheet P may be applied as the sheet width sensor 33. In this case, a mechanism for moving the sheet width sensor 33 in the widthwise direction of the sheet P is provided, one of both the lateral ends of the sheet P is detected by the sheet width sensor 33 moved in the widthwise direction, and the width of the sheet P is calculated based on the travel distance of the sheet width sensor 33 and the location of the one lateral end of the sheet P detected by the sheet width sensor 33.

The previously described ink-jet recording apparatus not according to the above embodiment has a structure in which a plurality of line heads are arranged spaced apart along a direction of conveyance of a sheet by a conveying belt. When, using this structure, a plurality of sheets are successively conveyed and respective different colors of ink droplets are sequentially ejected from the line heads to the sheets being conveyed to form respective multicolor images on the sheets, some of the sheets may have a smaller width than the others and the multicolor image formed thereon may protrude out of the sheet in the widthwise direction. In such a case, it is necessary to subject image data on the multicolor image to mask processing to reduce the ranges of ejection of ink droplets from the line heads in the widthwise direction of the sheet.

However, in a state where the plurality of sheets are successively conveyed and ink droplets are sequentially ejected from the line heads to the sheets being conveyed to form respective multicolor images on the sheets, if the ranges of ejection of ink droplets from all the line heads are reduced concurrently in the widthwise direction of the sheets, there may occur an inconvenience that, depending on the sheet, although the multicolor image does not protrude out of the sheet in the widthwise direction of the sheet, the width of the multicolor image is reduced instead. Therefore, the mask processing needs to be subjected to image data on a sheet-by-sheet basis.

Although a technique is proposed in which a misalignment of a sheet in the widthwise direction of the sheet is recognized and image data is subjected to mask processing based on the recognized misalignment before the ejection of ink droplets from line heads, the mask processing is not subjected to image data on a sheet-by-sheet basis.

Unlike the above conventional techniques, according to the above embodiment, in successively conveying a plurality of sheets and forming respective multicolor images on the sheets, as for a sheet short of the width to form a multicolor image, an image can be formed thereon by reducing the width of ink ejection according to the sheet width. As for a sheet having enough width to form a multicolor image, an image can be formed thereon as expected.

The structure, configuration, and processing of the above embodiment described with reference to FIGS. 1 to 5B are merely illustrative and are not intended to limit the present invention to them.

## Claims

1. An ink-jet recording apparatus (10) comprising:
a conveying belt (16) that conveys a sheet (P);
a plurality of line heads (15Y, 15B, 15C, 15M) that are arranged spaced apart along a direction of conveyance of the sheet (P) and sequentially eject respective different colors of ink droplets predetermined for formation of multicolor images to the sheet (P) to form a multicolor image on the sheet (P);
a sheet width sensor (33) that is disposed upstream of the line heads (15Y, 15B, 15C, 15M) in the direction of conveyance of the sheet (P) and detects a width of the sheet (P); and
a controller (38) that creates, for each of the line heads (15Y, 15B, 15C, 15M), a print queue indicating a queue of at least one print job for forming the multicolor image on the sheet (P), executes the print job in accordance with the print queue, and determines whether or not the width of the sheet (P) detected by the sheet width sensor (33) is smaller than a width of a sheet (P) for use in the print job,
wherein when determining that the width of the sheet (P) detected by the sheet width sensor (33) is smaller than the width of the sheet (P) for use in the print job, the controller (38) sets, on a basis of each of the line heads (15Y, 15B, 15C, 15M), width information indicating the detected width of the sheet (P) in association with a print queue element not yet being executed in the print queue at the line head (15Y, 15B, 15C, 15M) and executes, based on the width information set in association with the print queue element not yet being executed at each of the line heads (15Y, 15B, 15C, 15M), mask processing for reducing a size of a color image corresponding to the print queue element not yet being executed to the width indicated by the width information in a widthwise direction of the sheet (P).

2. The ink-jet recording apparatus (10) according to claim 1, wherein the controller (38) subjects, for each of a plurality of sheets (P) for use in a single print job, a color image corresponding to the print queue element to be formed on the sheet (P) and not yet being executed to the mask processing based on the width information set in association with the print queue element not yet being executed at each of the line heads (15Y, 15B, 15C, 15M).

3. The ink-jet recording apparatus (10) according to claim 1, wherein
the controller (38) determines whether or not the print queue at each of the line heads (15Y, 15B, 15C, 15M) contains a print queue element as a previous one to the print queue element not yet being executed, and
when determining that the print queue does not contain a print queue element as a previous one to the print queue element not yet being executed, the controller (38) executes the mask processing for reducing the size of the color image corresponding to the print queue element not yet being executed in the widthwise direction of the sheet (P) based on the width information set in association with the print queue element not yet being executed at each of the line heads (15Y, 15B, 15C, 15M).

4. The ink-jet recording apparatus (10) according to claim 3, wherein
when determining that the print queue contains a print queue element as a previous one to the print queue element not yet being executed, the controller (38) determines, on a basis of each of the line heads (15Y, 15B, 15C, 15M), whether or not the print queue element as a previous one to the print queue element not yet being executed in the print queue at the line head (15Y, 15B, 15C, 15M) has already finished, and
when determining that the print queue element as a previous one to the print queue element not yet being executed has not finished, the controller (38) executes, at a timing when the print queue element as a previous one to the print queue element not yet being executed has finished, the mask processing for reducing the size of the color image corresponding to the print queue element not yet being executed in the widthwise direction of the sheet (P) based on the width information set in association with the print queue element not yet being executed.

5. The ink-jet recording apparatus (10) according to claim 4, wherein when determining that the print queue element as a previous one to the print queue element not yet being executed has finished, the controller (38) executes, at a timing when the controller (38) has determined that the print queue element as a previous one to the print queue element not yet being executed has finished, the mask processing for reducing the size of the color image corresponding to the print queue element not yet being executed in the widthwise direction of the sheet (P) based on the width information set in association with the print queue element not yet being executed.
